# EUROPÄISCHE PATENTANMELDUNG

(11) **EP 3 115 787 A1**
(43) Veröffentlichungstag der Anmeldung: **11.01.2017**
(21) Anmeldenummer: 15176009.7
(22) Anmeldetag: 09.07.2015
(51) Int. Cl.: G01N 35/00

(54) **VERFAHREN ZUM AUSSERBETRIEBSETZEN EINES AUTOMATISCHEN ANALYSEGERÄTS**

(71) Anmelder: Siemens Healthcare Diagnostics Products GmbH, 35041 Marburg (DE)
(72) Erfinder: Kallies, Hartmut, 65719 Hofheim am Taunus (DE); Preidel, Markus, 60320 Frankfurt (DE); Solbach, David, 60316 Frankfurt (DE); Verhalen, Christian, 65201 Wiesbaden (DE)

(57) **Zusammenfassung**

Ein Verfahren zum Außerbetriebsetzen eines automatischen Analysegeräts (1), bei dem vor dem Abschalten einer zentralen Steuereinheit (14) des automatischen Analysegeräts (1) ein Beladungszustand des automatischen Analysegeräts (1) erfasst und auf einem nichtflüchtigen Speichermedium gespeichert wird, soll auch bei einem unvorhergesehen schnell notwendigen Herunterfahren des automatischen Analysegeräts die lange Wiederherstellungszeit des Systems beim erneuten Starten reduzieren. Dazu umfasst der Beladungszustand Position und Inhalt derjenigen im automatischen Analysegeräts (1) enthaltenen Küvetten, die ein Flüssigkeitsvolumen enthalten.

## Beschreibung

Die Erfindung betrifft ein Verfahren zum Außerbetriebsetzen eines automatischen Analysegeräts, bei dem vor dem Abschalten einer zentralen Steuereinheit des automatischen Analysegeräts ein Beladungszustand des automatischen Analysegeräts erfasst und auf einem nichtflüchtigen Speichermedium gespeichert wird.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsgefäßen und Reagenzflüssigkeitsbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten erfolgt vielfach, indem ein Aliquot, also eine Teilmenge, einer Körperflüssigkeitsprobe eines Patienten mittels einer Pipettiervorrichtung aus einem Probengefäße entnommen und in ein Reaktionsgefäß transferiert wird. Das Aliquot der Probe wird dann ebenfalls mittels einer Pipettiervorrichtung mit einem oder mehreren Testreagenzien in dem Reaktionsgefäß vermischt. Die erforderlichen Reagenzien werden in einer Anzahl von Reagenzbehältern vorrätig gehalten, die wiederum in einem Reagenzbehältervorrat aufbewahrt werden. Durch das Vermischen der Probe mit dem oder den erforderlichen Reagenzien wird eine biochemische Reaktion in Gang gesetzt, die eine messbare Veränderung einer optischen Eigenschaft des Reaktionsansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Innerhalb automatischer Analysegeräte, die zeitgleich eine Vielzahl von Analysen prozessieren können, werden die Messzellen, vor allem wenn es sich um im Wesentlichen röhrchenförmige Küvetten handelt, typischerweise mit Transferarmen zu den verschiedenen Stationen der Analyse bewegt. Diese Transferarme weisen eine Greifeinrichtung zum sicheren Erfassen und Abgeben der Küvetten auf. Nach dem Zusammenführen der zu analysierenden Probe und der Reagenzien zu einem Reaktionsansatz ist es häufig erforderlich, den Reaktionsansatz für eine bestimmte Zeit, bei einer bestimmten Temperatur zu inkubieren, bevor die mit dem zu bestimmenden Analyten korrelierende Veränderung einer optischen Eigenschaft des Reaktionsansatzes gemessen werden kann. Die Inkubation der Reaktionsansätze erfolgt in der Regel in einer Inkubationseinheit, die mehrere Aufnahmepositionen zur Zwischenlagerung der Küvetten während der Einwirkzeit aufweist, wobei die Wandungen der Aufnahmepositionen mittels Heizung/Kühlung auf einer vorgegebenen, kontrollierten Temperatur gehalten werden können. Eine Messzelle oder Küvette befindet sich also zu unterschiedlichen Zeitpunkten an unterschiedlichen Positionen/Stationen des automatischen Analysegeräts. Auch der Inhalt einer Messzelle oder Küvette ändert sich im Laufe der Abarbeitung eines Analyseverfahrens. Je nach dem Stand der Abarbeitung ist die Küvette leer, oder sie enthält ein Aliquot einer Probe, oder sie enthält ein Gemisch aus der Probe und nur einem oder nur einem Teil der notwendigen Reagenzien, oder sie enthält ein Gemisch aus der Probe und dem einem oder allen notwendigen Reagenzien, also der fertigen Reaktionsansatz.

In einigen Fehler- oder Servicefällen kann ein manueller Eingriff in das automatische Analysegerät notwendig werden. Dazu muss aus Sicherheitsgründen das gesamte Gerät oder wenigstens die zentrale Steuereinheit ausgeschaltet sein. Ebenso kann es bei einem Stromausfall dazu kommen, dass das Gerät für einen Zeitabschnitt stromlos ist, nachdem es mit Hilfe einer vorhandenen Notstromversorgung funktionsgemäß heruntergefahren und ausgeschaltet wurde. In diesen oder ähnlichen Situationen, in denen das gesamte Gerät oder die zentrale Steuereinheit für einen kurzen Zeitraum heruntergefahren wird, kommt es bislang regelmäßig aufgrund des aufwändigen Wiederanfahrprozesses zu einer relativ langen Ausfallzeit des Geräts.

Vor der Wiederinbetriebnahme des Geräts ist nämlich eine vollständige Ent- und Beladung des Gerätes durch den Benutzer notwendig, damit bei der Wiederbeladung die Identität der zuvor geladenen Reagenzbehälter oder Probengefäße z.B. über die Barcodes neu ermittelt werden kann. Auch Küvetten, die für ein geplantes Analyseverfahren mit Proben- und/oder Reagenzflüssigkeit befüllt sind oder die bereits fertige Reaktionsansätze enthalten, müssen entnommen werden. Dieser Vorgang ist sehr zeitintensiv, muss durch Benutzereingriffe unterstützt werden und verursacht den Verlust von wertvollem Proben- und Reagenzmaterial, da bereits begonnene aber noch nicht abgeschlossene Analysen nochmals von Beginn an wiederholt werden müssen. Lediglich die aufwändige und langwierige Zeit zum Spülen des Flüssigkeitssystems des Gerätes kann vom Benutzer alternativ durch Auswahl einer kürzeren Spülvariante beschleunigt werden.

Für das Herunterfahren in einen stromsparenden Stand-By-Modus mit ausgeschalteter zentraler Steuereinheit wird in der EP-A1-2738559 eine Speicherung der Beladungszustände zur schnelleren Wiederherstellung der Betriebsbereitschaft vorgeschlagen. Das dort beschriebene Verfahren geht jedoch von einem planbaren Herunterfahren nach Abschluss aller Nachweisreaktionen aus und eignet sich nicht für ein schnelles, ungeplantes Herunterfahren, z.B. im Falle eines Fehlers oder Stromausfalls.

Es ist daher Aufgabe der Erfindung, Verfahren und Mittel bereit zu stellen, welche auch bei einem unvorhergesehen, schnell notwendigen Herunterfahren des automatischen Analysegeräts die lange Wiederinbetriebnahmezeit des Geräts beim erneuten Starten reduzieren.

Diese Aufgabe wird erfindungsgemäß dadurch gelöst, dass vor dem Abschalten der zentralen Steuereinheit des automatischen Analysegeräts ein Beladungszustand erfasst und auf einem nichtflüchtigen Speichermedium gespeichert wird, wobei der Beladungszustand mindestens die jeweilige Position und den Inhalt derjenigen in dem automatischen Analysegerät enthaltenen Küvetten umfasst, die ein Flüssigkeitsvolumen enthalten.

Dies hat den Vorteil, dass der Verlust von wertvollem Proben- und Reagenzmaterial minimiert wird, weil auf eine vollständige Entladung und Verwerfung aller Küvetten, die für ein geplantes Analyseverfahren mit Proben- und/oder Reagenzflüssigkeit befüllt sind oder die bereits fertige Reaktionsansätze enthalten, verzichtet werden kann. Ein weiterer wesentlicher Vorteil ist, dass bereits begonnene Analysen nach der Wiederinbetriebnahme des Analysegeräts unter Umständen einfach fortgeführt werden können, indem an der Stelle des Analyseverfahrens fortgefahren wird, an der das Analyseverfahren durch das Außerbetriebsetzen des Analysegeräts zuvor unterbrochen worden war.

Gegenstand der vorliegenden Erfindung ist also ein Verfahren zum Außerbetriebsetzen eines automatischen Analysegeräts, bei dem vor dem Abschalten einer zentralen Steuereinheit des automatischen Analysegeräts ein Beladungszustand des automatischen Analysegeräts erfasst und auf einem nichtflüchtigen Speichermedium gespeichert wird, wobei der Beladungszustand Position und Inhalt derjenigen im automatischen Analysegerät enthaltenen Küvetten umfasst, die ein Flüssigkeitsvolumen enthalten.

Automatische Analysegeräte umfassen üblicherweise einen Vorratsbehälter mit einer Vielzahl von zunächst leeren Küvetten, die für die Durchführung von Nachweisreaktionen (Analysen) vorgesehen sind. Immer wenn das Analysegerät den Auftrag für die Durchführung einer Analyse erhält, wird eine Küvette aus dem Vorratsbehälter entnommen und an eine erste Position transportiert, in der ein erstes Flüssigkeitsvolumen in die Küvette abgegeben wird. Je nach Art der angeforderten Analyse kann das erste Flüssigkeitsvolumen ein Probenflüssigkeitsvolumen oder ein Reagenzflüssigkeitsvolumen sein. Die Abgabe eines zweiten Flüssigkeitsvolumens kann je nach Art der angeforderten Analyse oder je nach Architektur des Analysegeräts entweder in derselben ersten Position stattfinden oder in einer zweiten Position, zu der die teilgefüllte Küvette transportiert wurde. Nach Bedarf kann es erforderlich sein, dass die Probenflüssigkeit mit mehr als einer Reagenzflüssigkeit vermischt wird. Jedenfalls wird für jede Küvette jede Abgabe eines Flüssigkeitsvolumens und jede Positionsänderung protokolliert, so dass zu jedem Zeitpunkt, in dem ein nicht geplantes Außerbetriebsetzen des automatischen Analysegeräts erforderlich ist, Position und Inhalt der an einem Analysevorgang beteiligten Küvetten bekannt ist und auf einem nichtflüchtigen Speichermedium gespeichert werden kann. Alternativ zur Protokollierung der Position einer Küvette durch beispielsweise Speicherung der Nummer einer Aufnahmeposition, in welche eine Küvette eingesetzt wurde, kann das Analysegerät auch so ausgestaltet sein, dass es über ein Sender-Empfänger-System zum automatischen und berührungslosen Identifizieren und Lokalisieren von Objekten verfügt, wie beispielsweise ein System zu Identifizierung mit Hilfe von Radiowellen (RFID, radio frequency identification). In einem solchen System wäre jede Küvette mit einem Transponder, also einem Funketikett ausgestattet, und das Analysegerät würde über ein oder mehrere Lesegeräte verfügen.

Wie bereits beschrieben umfassen automatische Analysegeräte häufig weiterhin Probengefäß- und/oder Reagenzbehältervorräte. Die Probengefäße enthalten die zu analysierenden Proben, und die Reagenzbehälter enthalten die zur Analyse benutzten Reagenzflüssigkeiten. Dabei muss der zentralen Steuereinheit zwingend bekannt sein, welches Probengefäß und welcher Reagenzbehälter in welchen Positionen im Vorrat abgelegt sind, damit eine automatische Prozessierung möglich ist.

In vorteilhafter Ausgestaltung umfasst der gespeicherte Beladungszustand daher zusätzlich Position und Inhalt der in dem automatischen Analysegerät enthaltenen Probengefäße. Unter dem Begriff "Inhalt" ist sowohl die Probenidentität als auch die Füllmenge des Probenmaterials zu verstehen. Während die Probenidentität üblicherweise durch das Auslesen einer probenspezifischen Kennzeichnung, beispielsweise in Form eines Barcodes oder eines RFID-Etiketts, auf dem Probengefäß, erfasst wird, wird die Füllmenge durch eine Messung des ursprünglichen Füllstands und Berücksichtigung von entnommenen Probenmengen erfasst.

Vorrichtungen für die automatisierte Zufuhr von Probengefäßen in ein automatisches Analysegerät können unterschiedlich ausgestaltet sein. Üblicherweise werden die Probengefäße zunächst an eine Position transportiert, in der eine probenspezifische Kennzeichnung, z.B. ein Barcode oder ein RFID-Etikett automatisch gelesen wird. Nach Identifikation des Probengefäßes kann das Probengefäß in eine Position transportiert werden, in der eine automatische Entnahme von Probenflüssigkeit mittels einer Pipettiervorrichtung erfolgt. Dabei wird üblicherweise gleichzeitig der Füllstand der Probenflüssigkeit ermittelt, beispielsweise mit Hilfe eines in der Pipettiernadel integrierten kapazitiven Füllstandsensors. Nach Entnahme mindestens eines Aliquots der Probenflüssigkeit wird ein Probengefäß üblicherweise in eine Position transportiert, die die Entnahme des Probengefäßes aus dem Analysegerät erlaubt oder die eine Rückführung des Probengefäßes zu der Pipettierposition erlaubt, für den Fall, dass eine nochmalige Probenentnahme notwendig werden sollte.

Jedenfalls wird für jedes Probengefäß die Probenidentität, jeweils der aktuelle Füllstand und jede Positionsänderung protokolliert, so dass zu jedem Zeitpunkt, in dem ein nicht geplantes Außerbetriebsetzen des automatischen Analysegeräts erforderlich ist, Position und Inhalt der in dem Analysegerät enthaltenen Probengefäße bekannt ist und auf einem nichtflüchtigen Speichermedium gespeichert werden kann. Alternativ zur Protokollierung der Position eines Probengefäßes kann -wie bereits weiter oben beschrieben- auch vorgesehen sein, dass das Analysegerät über ein Sender-Empfänger-System zum automatischen und berührungslosen Identifizieren und Lokalisieren von Objekten verfügt, wie beispielsweise ein RFID-System.

Dies hat den Vorteil, dass bei der Wiederinbetriebnahme des Geräts auf eine vollständige Ent- und Beladung des Gerätes mit Probengefäßen durch einen Benutzer verzichtet werden kann, weil die Beladung des Analysegeräts und der Zustand der Probengefäße bekannt ist und nicht neu ermittelt werden muss.

Der Beladungszustand des automatischen Analysegeräts mit Probengefäßen kann bei der Wiederinbetriebnahme direkt in die zentrale Steuereinheit geladen werden. Andernfalls wäre eine umständliche Ermittlung durch automatisierte Entnahme jedes einzelnen Probengefäßes und Auslesen beispielsweise eines aufgedruckten Barcodes notwendig, was den Wiederinbetriebnahmeprozess erheblich verlangsamen würde.

Weiterhin umfasst der gespeicherte Beladungszustand vorteilhafterweise Position und Inhalt der in dem automatischen Analysegerät enthaltenen Reagenzbehälter. Unter dem Begriff "Inhalt" ist sowohl die Identität der Reagenzflüssigkeit als auch die Füllmenge der Reagenzflüssigkeit zu verstehen. Während die Identität der Reagenzflüssigkeit üblicherweise durch das Auslesen einer reagenzspezifischen Kennzeichnung, beispielsweise in Form eines Barcodes oder eines RFID-Etiketts, auf dem Reagenzbehälter, erfasst wird, wird die Füllmenge durch eine Messung des ursprünglichen Füllstands und Berücksichtigung von entnommenen Reagenzflüssigkeitsmengen erfasst.

Vorrichtungen für die automatisierte Zufuhr von Reagenzbehältern in ein automatisches Analysegerät können unterschiedlich ausgestaltet sein. Üblicherweise werden die Reagenzbehälter zunächst an eine Position transportiert, in der eine reagenzspezifische Kennzeichnung, z.B. ein Barcode oder ein RFID-Etikett automatisch gelesen wird. Nach Identifikation des Reagenzbehälters kann der Reagenzbehälter in eine Position transportiert werden, in der eine automatische Entnahme von Reagenzflüssigkeit mittels einer Pipettiervorrichtung erfolgt. Dabei wird üblicherweise gleichzeitig der Füllstand der Reagenzflüssigkeit ermittelt, beispielsweise mit Hilfe eines in der Pipettiernadel integrierten kapazitiven Füllstandsensors. Üblicherweise werden Reagenzbehälter nach Entnahme der gesamten Reagenzflüssigkeit in eine Position transportiert, die die Entnahme des leeren Reagenzbehälters aus dem Analysegerät erlaubt.

Jedenfalls wird für jeden Reagenzbehälter die Identität der Reagenzflüssigkeit, jeweils der aktuelle Füllstand und jede Positionsänderung protokolliert, so dass zu jedem Zeitpunkt, in dem ein nicht geplantes Außerbetriebsetzen des automatischen Analysegeräts erforderlich ist, Position und Inhalt der in dem Analysegerät enthaltenen Reagenzbehälter bekannt ist und auf einem nichtflüchtigen Speichermedium gespeichert werden kann. Alternativ zur Protokollierung der Position eines Reagenzbehälters kann -wie bereits weiter oben beschrieben- auch vorgesehen sein, dass das Analysegerät über ein Sender-Empfänger-System zum automatischen und berührungslosen Identifizieren und Lokalisieren von Objekten verfügt, wie beispielsweise ein RFID-System.

Dies hat den Vorteil, dass bei der Wiederinbetriebnahme des Geräts auf eine vollständige Ent- und Beladung des Gerätes mit Reagenzbehältern durch einen Benutzer verzichtet werden kann, weil die Beladung des Analysegeräts und der Zustand der Probengefäße bekannt ist und nicht neu ermittelt werden muss. Der Beladungszustand des automatischen Analysegeräts mit Reagenzbehältern kann bei der Wiederinbetriebnahme direkt in die zentrale Steuereinheit geladen werden. Andernfalls wäre eine umständliche Ermittlung durch automatisierte Entnahme jedes einzelnen Reagenzbehälters und Auslesen beispielsweise eines aufgedruckten Barcodes notwendig, was den Wiederinbetriebnahmeprozess erheblich verlangsamen würde.

Darüber hinaus umfasst ein automatisches Analysegerät häufig einen Verbrauchsmaterialien- und/oder Abfallvorrat. Küvetten, Pipettenspitzen oder Rührstäbchen sind typische Verbrauchsmaterialien, die im Gerät in größeren Stückzahlen in entsprechenden Vorratsbehältern vorrätig gehalten werden und nach einmaliger Benutzung in einen Abfallbehälter entsorgt werden. Vorteilhafterweise umfasst der gespeicherte Beladungszustand daher den Inhalt eines im automatischen Analysegerät enthaltenen Vorrats- und/oder Abfallbehälters. Hierdurch wird vermieden, dass der Status der Verbrauchsmaterialien und des Abfalls bei der Wiederinbetriebsetzung geprüft werden muss.

Das beschriebene Verfahren kann als Reaktion auf einen Fehler in dem automatischen Analysegerät ausgeführt werden. Alternativ kann das Verfahren während einer Notstromversorgung des automatischen Analysegeräts ausgeführt werden, mit der das Analysegerät in Folge eines Stromausfalls betrieben wird. Gerade in diesen unvorhersehbaren Zuständen sind praktisch immer befüllte Küvetten in verschiedenen Positionen im Gerät vorhanden, z.B. in Positionen, in denen die Abgabe von Proben- und oder Reagenzflüssigkeit in die Küvetten erfolgt, in Inkubationsvorrichtungen oder in Messpositionen. Position und Inhalt derjenigen Küvetten, die ein Flüssigkeitsvolumen enthalten, für die also mindestens ein Pipettierschritt bereits protokolliert ist, werden als Beladungszustand durch das beschriebene Verfahren gespeichert, der dann beim Wiederanfahren zur Verfügung steht.

Ein weiterer Gegenstand der vorliegenden Erfindung ist ein Verfahren zum Inbetriebsetzen eines automatischen Analysegeräts, bei dem nach dem Einschalten einer zentralen Steuereinheit des automatischen Analysegeräts der in dem bislang beschriebenen Verfahren gespeicherte Beladungszustand aus dem nichtflüchtigen Speichermedium in die zentrale Steuereinheit geladen wird. Hierdurch wird ein besonders schnelles Wiederanfahren ermöglicht, da auf die abgespeicherte Beladungssituation zurückgegriffen werden kann. Eine vollständige Entleerung und Wiederbefüllung des Geräts unter komplettem Verwerfen der Küvetten, die ein Flüssigkeitsvolumen enthalten, ist nicht nötig.

Ein weiterer Gegenstand der vorliegenden Erfindung ist ein automatisches Analysegerät, umfassend eine zentrale Steuereinheit und ein nichtflüchtiges Speichermedium, wobei die zentrale Steuereinheit so konfiguriert ist, dass sie ein Verfahren zum Außerbetriebsetzen des automatischen Analysegeräts mit den folgenden Schritten steuert:
i. Erfassen eines Beladungszustand des automatischen Analysegeräts, der Beladungszustand umfassend Position und Inhalt derjenigen im automatischen Analysegerät enthaltenen Küvetten, die ein Flüssigkeitsvolumen enthalten;
ii. Speichern des Beladungszustands auf einem nichtflüchtigen Medium; und dann
iii. Abschalten der zentralen Steuereinheit.

Hierzu umfasst die Steuereinheit eine entsprechend geeignete Software, die diese zum Ausführen der Schritte des Verfahrens veranlasst.

Vorzugsweise umfasst der Beladungszustand zusätzlich Position und Inhalt der in dem automatischen Analysegerät enthaltenen Probengefäße und/oder Position und Inhalt der in dem automatischen Analysegerät enthaltenen Reagenzbehälter und/oder zusätzlich den Inhalt eines in dem automatischen Analysegerät enthaltenen Vorrats- und/oder Abfallbehälters.

In einer bevorzugten Ausführungsform umfasst das automatische Analysegerät weiter eine Benutzerschnittstelle für die Eingabe von Befehlen, beispielsweise einen berührungsempfindlichen Bildschirm mit einer entsprechenden Benutzeroberfläche, wobei die zentrale Steuereinheit so konfiguriert ist, dass sie auf einen Befehl eines Benutzers das Verfahren zum Außerbetriebsetzen des automatischen Analysegeräts mit den Schritten i bis iii steuert. Vorteilhafterweise werden einem Benutzer mehrere Auswahlmöglichkeiten zum Außerbetriebsetzen des automatischen Analysegeräts angeboten. Mit anderen Worten: Der Benutzer kann z.B. im Falle eines Stromausfalls oder eines Fehlers zumindest unter zwei Alternativen wählen, nämlich dem erfindungsgemäßen Herunterfahren unter Speicherung des Beladungszustands oder einem vollständigen Herunterfahren unter Verwerfen des aktuellen Beladungszustandes.

Bevorzugterweise ist die zentrale Steuereinheit ferner so konfiguriert ist, dass sie nach dem Einschalten der zentralen Steuereinheit auf einen Befehl eines Benutzers ein Verfahren zum Inbetriebsetzen des automatischen Analysegeräts steuert, bei dem ein gespeicherter Beladungszustand aus dem nichtflüchtigen Speichermedium in die zentrale Steuereinheit geladen wird. Vorzugsweise bietet die Benutzerschnittstelle einem Benutzer mehrere Auswahlmöglichkeiten zum Inbetriebsetzen des automatischen Analysegeräts an. Auch hier wird dem Benutzer die Wahl gelassen, ob er den gespeicherten Beladungszustand verwenden will, oder ob er eine komplette Neubefüllung des Gerätes beim Inbetriebsetzen durchführen will.

Die mit der Erfindung erzielten Vorteile bestehen insbesondere darin, dass durch die Speicherung des Beladungszustandes eines automatischen Analysegeräts beim Außerbetriebsetzen unter Einbeziehung von Position und Inhalt derjenigen Küvetten, die ein Flüssigkeitsvolumen enthalten, die also bereits Teil eines begonnen Analysevorgangs sind, eine Fortsetzung der Bearbeitung nach einer Betriebsunterbrechung ermöglicht wird. Ein vollständiges Neubeladen des Geräts ist somit nicht erforderlich und Betriebsunterbrechungen durch Stromausfälle oder Fehler werden deutlich verkürzt.

Ein Ausführungsbeispiel der Erfindung wird anhand von Zeichnungen näher erläutert. Darin zeigen:
- FIG 1: eine schematische Darstellung eines automatischen Analysegeräts,
- FIG 2: ein Ablaufdiagramm eines Verfahrens zum Außerbetriebsetzen des automatischen Analysegeräts, und
- FIG 3: ein Ablaufdiagramm eines Verfahrens zum Inbetriebsetzen des automatischen Analysegeräts.

Gleiche Teile sind in allen Figuren mit denselben Bezugszeichen versehen.

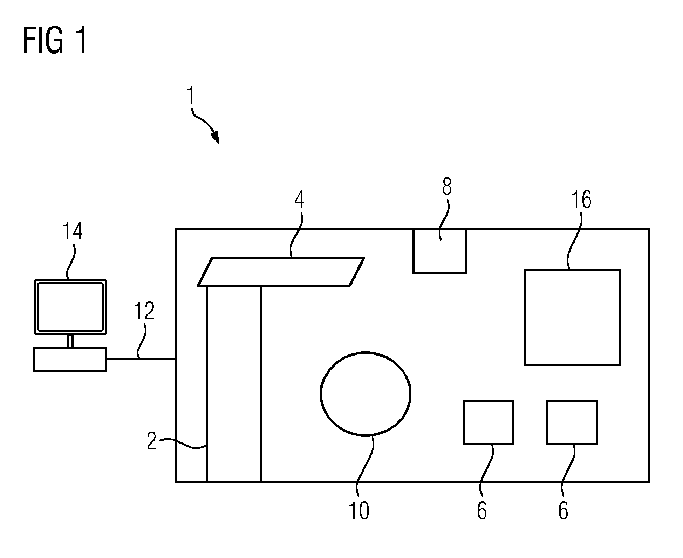

FIG 1 zeigt eine schematische Darstellung eines automatischen Analysegeräts 1 mit einigen darin enthaltenen Bauteilen. Hierbei werden nur die wichtigsten Bauteile stark vereinfacht dargestellt, um die grundsätzliche Funktion des automatischen Analysegeräts 1 zu erläutern, ohne hierbei detailliert die einzelnen Teile jedes Bauteils darzustellen.

Das automatische Analysegerät 1 ist dafür ausgebildet, vollautomatisch verschiedenste Analysen von Blut oder anderen Körperflüssigkeiten durchzuführen, ohne dass hierfür Aktivitäten eines Benutzers notwendig wären. Diese beschränken sich vielmehr auf Wartung oder Reparatur und Nachfüllarbeiten, wenn z.B. Küvetten oder Reagenzien nachgefüllt werden müssen.

Die Probengefäße werden dem automatischen Analysegerät 1 auf nicht näher dargestellten Schlitten in einer Zuführungsschiene 2 zugeführt. Informationen hinsichtlich der pro Probe durchzuführenden Analysen können hierbei beispielsweise mittels auf den Probengefäßen angebrachten Strichcodes übergeben werden, die in dem automatischen Analysegerät 1 ausgelesen werden. Aus den Probengefäßen werden in einer Pipettiereinrichtung 4 Aliquots mittels einer nicht näher dargestellten Pipettiernadel entnommen.

Die Aliquots werden ebenfalls nicht näher dargestellten Küvetten zugeführt, in denen die eigentlichen Analysen mittels verschiedenster Messgeräte 6 wie z.B. Photometern etc. durchgeführt werden. Die Küvetten werden aus einem Küvettenvorrat 8 entnommen. Zusätzlich können aus einem Reagenzbehältervorrat 10 mittels einer weiteren nicht weiter dargestellten Pipettiernadel weitere Reagenzien der jeweiligen Küvette zugeführt werden, die je nach durchzuführender Analyse erforderlich sind.

Der Transport der Küvetten innerhalb des automatischen Analysegeräts 1 erfolgt mit hier nicht näher dargestellten Transporteinrichtungen wie z.B. Transferarmen, die in verschiedenste Raumrichtungen bewegbar sind und eine Greifeinrichtung zum Erfassen der Küvetten aufweisen. Der gesamte Prozess wird von einer zentralen Steuerungseinrichtung, wie z.B. einem über eine Datenleitung 12 angeschlossenen Rechner 14, gesteuert, unterstützt durch eine Vielzahl weiterer, nicht näher dargestellter elektronischer Schaltungen und Mikroprozessoren innerhalb des automatischen Analysegeräts 1 und seiner Bauteile. Der Rechner 14 weist hierbei auch einen nichtflüchtigen Speicher in Form einer Festplatte, eines USB-Sticks oder ähnliches auf.

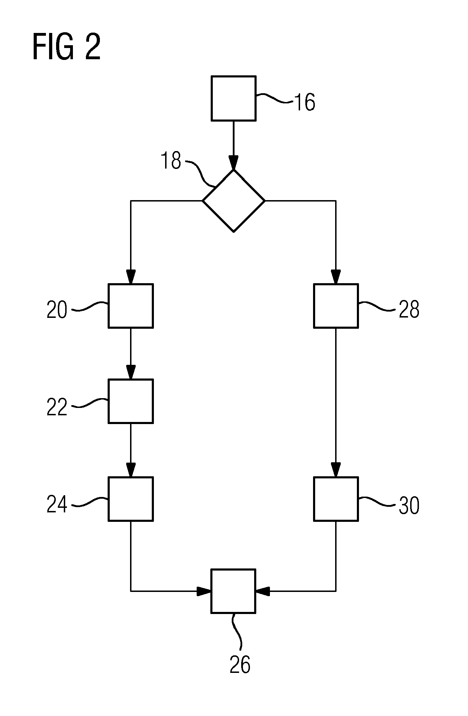

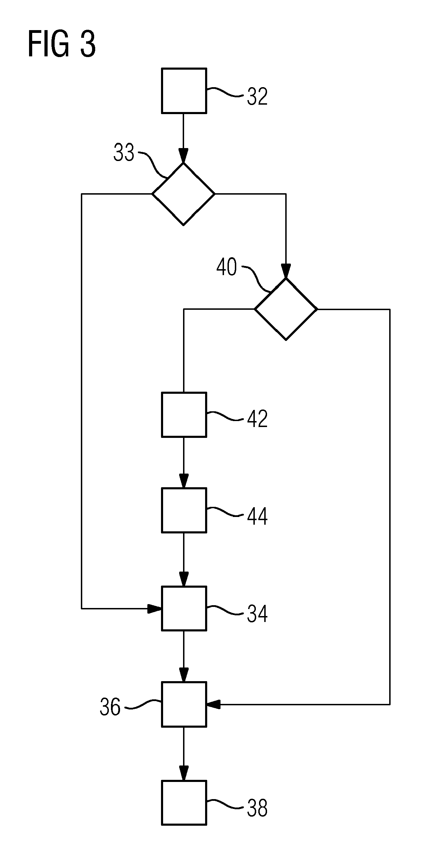

Im Falle einer kurzfristigen, schnell einzuleitenden Betriebsunterbrechung, wie z.B. in Folge eines Stromausfalls oder eines Fehlers im Gerät, soll die Dauer der Unterbrechung reduziert und der Aufwand beim Wiederinbetriebsetzen minimiert werden. Hierzu werden das in FIG 2 gezeigte Verfahren zum Außerbetriebsetzen und das in FIG 3 gezeigte Verfahren zum Inbetriebsetzen angewandt. Diese zeigen jeweils Ablaufdiagramme des Verfahrens.

In Schritt 16 im Verfahren nach der FIG 2 wird ein Ausschalten des automatischen Analysegeräts 1 notwendig. Grund hierfür kann ein Fehler sein oder aber ein Ausfall der Stromversorgung. Im letzteren Fall werden die in FIG 2 folgenden Schritte unter Stromversorgung aus einem Notstromaggregat durchgeführt.

In Schritt 18 wird dem Benutzer auf der Benutzeroberfläche des Rechners 14 eine Auswahlmöglichkeit gegeben, ein normales Herunterfahren zu veranlassen oder das erfindungsgemäße Verfahren zum Außerbetriebsetzen des automatischen Analysegeräts 1 durchzuführen. Wählt der Benutzer das normale Herunterfahren, so werden in Schritt 20 sämtliche Reagenzgefäße ausgefahren und müssen durch den Benutzer händisch entnommen werden. In Schritt 22 werden die bereits pipettierten Aliquots in den im automatischen Analysegerät 1 vorhandenen Küvetten vernichtet, indem alle Flüssigkeitenthaltenden Küvetten dem Abfallbehälter zugeführt. Anschließend erfolgt in Schritt 24 ein Spülen des gesamten Nasssystems des automatischen Analysegeräts 1, bis schließlich in Schritt 26 ein Abschalten des automatischen Analysegeräts 1 und des Rechners 14 erfolgt.

Wählt der Benutzer hingegen in Schritt 18 das erfindungsgemäße Verfahren zum Außerbetriebsetzen des automatischen Analysegeräts 1 aus, so wird in Schritt 28 der Beladungszustand des automatischen Analysegeräts 1 ermittelt und auf der Festplatte des Rechners 14 gespeichert. Der Beladungszustand umfasst Position und Inhalt all derjeniger im Gerät befindlichen Küvetten, die ein Flüssigkeitsvolumen enthalten, Position und Inhalt aller Reagenzbehälter und Probengefäße, sowie die Menge des Inhalts von Vorrats- und Abfallbehältern des automatischen Analysegeräts 1.

Nach der Ermittlung und Speicherung des Beladungszustands in Schritt 28 wird in Schritt 30 das gesamte Nasssystem des automatischen Analysegeräts 1 gespült, bis schließlich ebenfalls in Schritt 26 ein Abschalten des automatischen Analysegeräts 1 und des Rechners 14 erfolgt.

Durch den gespeicherten Beladungszustand kann das Inbetriebsetzen des automatischen Analysegeräts 1 wesentlich schneller erfolgen, was in FIG 3 erläutert wird. Nach dem Einschalten des automatischen Analysegeräts 1 und des Rechners 14 in Schritt 32 prüft der Rechner 14 in Schritt 33 selbstständig, ob auf der installierten Festplatte ein gespeicherter Beladungszustand vorhanden ist, d.h. ob beim vorherigen Außerbetriebsetzen das erfindungsgemäße Verfahren vom Benutzer ausgewählt wurde. Ist dies nicht der Fall, so wird davonausgegangen, dass die Reagenzbehälter entladen wurden, und es erfolgt in Schritt 34 ein Neubeladen des automatischen Analysegeräts 1 mit Reagenzbehältern, die im Reagenzbehältervorrat 10 abgelegt werden.

Anschließend erfolgt in Schritt 36 das Spülen des gesamten Nasssystems des automatischen Analysegeräts 1. In Schritt 38 ist die Betriebsbereitschaft wieder hergestellt, und es kann mit der Analyse von Proben begonnen werden.

Stellt der Rechner 14 in Schritt 33 jedoch fest, dass ein gespeicherter Beladungszustand auf der Festplatte vorliegt, so wird in Schritt 40 dem Benutzer auf der Benutzeroberfläche des Rechners 14 eine Auswahlmöglichkeit gegeben, ein Laden dieses Beladungszustandes zu veranlassen oder aber eine vollständige Neuinitialisierung des automatischen Analysegeräts 1 durchzuführen. Wählt der Benutzer das Laden des Beladungszustandes aus, so werden die während des erfindungsgemäßen Außerbetriebsetzens gespeicherten Beladungszustände übernommen, d.h. für alle Flüssigkeit enthaltenden Küvetten, für alle Reagenzbehälter und Probengefäße liegen im Rechner 14 die vor dem Herunterfahren aktuellen Positionen und Inhalte vor. Unterbrochene Analysen können ggf. weitergeführt werden, bereits pipettierte Proben-Aliquots, Reagenz-Aliquots und fertige Testansätze können weiter verwendet werden. Das Verfahren springt direkt zu Schritt 36, dem Spülen des Nasssystems und ist in Schritt 38, und das automatische Analysegerät 1 ist vergleichsweise schnell wieder einsatzbereit.

Alternativ kann der Benutzer - falls z.B. manuelle Änderungen während des Nichtbetriebs des automatischen Analysegeräts 1 vorgenommen wurden, wie z.B. ein Austausch von Bauteilen, oder wenn der Nichtbetrieb unerwartet lang andauerte - in Schritt 40 auch eine vollständige Initialisierung des automatischen Analysegeräts 1 auswählen. In diesem Fall wird der gespeicherte Beladungszustand verworfen.

Stattdessen werden in Schritt 42 sämtliche Reagenzbehälter ausgefahren und müssen durch den Benutzer händisch entnommen werden. In Schritt 44 werden die bereits pipettierten Aliquots in den im automatischen Analysegerät 1 vorhandenen Küvetten vernichtet, indem die Küvetten dem Abfallbehälter zugeführt werden. Anschließend erfolgt in Schritt 34 das Neubeladen des automatischen Analysegeräts 1 mit Reagenzbehältern, die im Reagenzbehältervorrat 10 abgelegt werden. Das Verfahren schließt mit den bereits beschriebenen Schritten 36 und 38 ab.

### BEZUGSZEICHENLISTE

- 1: automatisches Analysegerät
- 2: 2uführungsschiene
- 4: Pipettiereinrichtung
- 6: Messgerät
- 8: Küvettenvorrat
- 10: Reagenzbehältervorrat
- 12: Datenleitung
- 14: Rechner
- 16-44: Schritt

## Patentansprüche

1. Verfahren zum Außerbetriebsetzen eines automatischen Analysegeräts (1), bei dem vor dem Abschalten einer zentralen Steuereinheit (14) des automatischen Analysegeräts (1) ein Beladungszustand des automatischen Analysegeräts (1) erfasst und auf einem nichtflüchtigen Speichermedium gespeichert wird,
**dadurch gekennzeichnet,**
**dass** der Beladungszustand Position und Inhalt derjenigen im automatischen Analysegerät (1) enthaltenen Küvetten umfasst, die ein Flüssigkeitsvolumen enthalten.

2. Verfahren nach Anspruch 1, bei dem der Beladungszustand zusätzlich Position und Inhalt der in dem automatischen Analysegerät (1) enthaltenen Probengefäße umfasst.

3. Verfahren nach einem der vorhergehenden Ansprüche, bei dem der Beladungszustand zusätzlich Position und Inhalt der in dem automatischen Analysegerät (1) enthaltenen Reagenzbehälter umfasst.

4. Verfahren nach einem der vorhergehenden Ansprüche, bei dem der Beladungszustand zusätzlich den Inhalt eines in dem automatischen Analysegerät (1) enthaltenen Vorrats- und/oder Abfallbehälters umfasst.

5. Verfahren nach einem der vorhergehenden Ansprüche, welches als Reaktion auf einen Fehler in dem automatischen Analysegerät (1) ausgeführt wird.

6. Verfahren nach einem der vorhergehenden Ansprüche, welches während einer Notstromversorgung des automatischen Analysegeräts (1) ausgeführt wird.

7. Verfahren zum Inbetriebsetzen eines automatischen Analysegeräts (1), bei dem nach dem Einschalten einer zentralen Steuereinheit (14) des automatischen Analysegeräts (1) der in dem Verfahren nach einem der Ansprüche 1 bis 6 gespeicherte Beladungszustand aus dem nichtflüchtigen Speichermedium in die zentrale Steuereinheit (14) geladen wird.

8. Automatisches Analysegerät (1), umfassend eine zentrale Steuereinheit (14) und ein nichtflüchtiges Speichermedium, wobei die zentrale Steuereinheit (14) so konfiguriert ist, dass sie ein Verfahren zum Außerbetriebsetzen des automatischen Analysegeräts (1) mit den folgenden Schritten steuert:
i. Erfassen eines Beladungszustand des automatischen Analysegeräts, der Beladungszustand umfassend Position und Inhalt derjenigen im automatischen Analysegerät (1) enthaltenen Küvetten, die ein Flüssigkeitsvolumen enthalten;
ii. Speichern des Beladungszustands auf einem nichtflüchtigen Medium; und dann
iii. Abschalten der zentralen Steuereinheit (14).

9. Automatisches Analysegerät (1) nach Anspruch 8, wobei der Beladungszustand zusätzlich Position und Inhalt der in dem automatischen Analysegerät (1) enthaltenen Probengefäße und/oder Position und Inhalt der in dem automatischen Analysegerät (1) enthaltenen Reagenzbehälter und/oder zusätzlich den Inhalt eines in dem automatischen Analysegerät (1) enthaltenen Vorratsund/oder Abfallbehälters umfasst.

10. Automatisches Analysegerät (1) nach einem der Ansprüche 8 und 9, weiter umfassend eine Benutzerschnittstelle für die Eingabe von Befehlen, wobei die zentrale Steuereinheit (14) so konfiguriert ist, dass sie auf einen Befehl eines Benutzers das Verfahren zum Außerbetriebsetzen des automatischen Analysegeräts (1) mit den Schritten i bis iii steuert.

11. Automatisches Analysegerät (1) nach Anspruch 10, wobei die zentrale Steuereinheit (14) ferner so konfiguriert ist, dass sie nach dem Einschalten der zentralen Steuereinheit (14)auf einen Befehl eines Benutzers ein Verfahren zum Inbetriebsetzen des automatischen Analysegeräts (1) steuert, bei dem ein gespeicherter Beladungszustand aus dem nichtflüchtigen Speichermedium in die zentrale Steuereinheit (14) geladen wird.
